(19) Europäisches Patentamt
European Patent Office
Office européen des brevets

(11) **EP 1 931 166 A1**

(12) **EUROPEAN PATENT APPLICATION**

(43) Date of publication:
**11.06.2008 Bulletin 2008/24**

(51) Int Cl.:
***H04Q 7/38*** *(2006.01)*

(21) Application number: **07121777.2**

(22) Date of filing: **28.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **05.12.2006 GB 0624286**

(71) Applicant: **ROKE MANOR RESEARCH LIMITED Romsey,
Hampshire SO51 0ZN (GB)**

(72) Inventor: **Hulbert, Anthony Peter
Southampton, Hampshire SO16 3DF (GB)**

(74) Representative: **Payne, Janice Julia
Siemens AG,
Postfach 22 16 34
80506 München (DE)**

(54) **Call admission control in a mobile communication system**

(57)    A method of controlling call admission in a communication system comprises predicting an estimated base station noise rise due to a new user wishing to join a cell of the system; determining availability of resources based on the predicted noise rise due to the new user; and allocating resources only if the predicted noise rise due to the new user does not cause a maximum total permitted noise rise level in the system to be exceeded. A matrix of average geometric cross coupling coefficients between cells is predetermined and stored for each base station, with elements for the base station's immediate neighbours. The reported measurements of the mobile of the new user, together with the predetermined cross coupling coefficients from the matrix are used to determine whether to admit the new user.

FIG 1

EP 1 931 166 A1

**Description**

This invention relates to a method of controlling call admission, in particular for code division multiple access (CDMA) cellular radio networks.

CDMA is interference limited, so the signal to interference ratio is used to control whether a system is overloaded. If power were allowed to increase unchecked, the system would become unstable. There are various ways of determining whether the system is fully loaded.

A common method for call admission in CDMA cellular mobile radio networks is based on setting a threshold in the relative noise rise in the base station receivers. This effectively defines the loading in the network on the uplink (mobile to base station communications direction). Conventionally, this involves testing the current noise rise in the base stations. If this exceeds a threshold then new calls are not allowed. The problems with this approach are that it is not clear in how many base stations the noise rise should be tested and for higher bit rate users, especially those near the edge of their cells, admittance could lead to a large further noise rise.

If this possibility must be accommodated for all possible users, then the capacity margin will be excessive for the lower bit rate users and/or users closer to the centre of the cell. For these reasons it is preferable to base the call admission policy on a prediction of the noise rise that would occur *if* the call was allowed. This prediction is a non-trivial problem. Previous attempts at this have been based on considering detailed parameters of *all* existing calls. The present invention describes an approximate approach based on average assumptions of deployment *without* the need to know the exact details of the scenario.

Predictions for isolated cells can be carried out based on known information about that cell, but once there are multiple cells involved, with pathloss to be taken into account, then the conventional methods are too complex.

In accordance with the present invention, a method of controlling call admission in a communication system comprises predicting an estimated base station noise rise due to a new user wishing to join a cell of the system; determining availability of resources based on the predicted noise rise due to the new user; and allocating resources only if the predicted noise rise due to the new user does not cause a maximum total permitted noise rise level in the system to be exceeded; wherein a matrix of average geometric cross coupling coefficients between cells is predetermined and stored for each base station, with elements for the base station's immediate neighbours; and wherein the reported measurements of the mobile of the new user, together with the predetermined cross coupling coefficients from the matrix are used to determine whether to admit the new user.

Preferably, the base station noise rise is predicted using current noise rises in base stations in other cells in the system and reported measurements from potential base stations.

Preferably, the base stations in the other cells whose noise rises are used in predicting the base station noise rise in the cell which the new user wishes to make a call are restricted to cells that are neighbours of that cell

Preferably, a mobile device of the new user determines strength of pilots received from potential base stations, determines the base station providing the strongest pilot and reports its measurements to that base station.

Preferably, the reported measurements are used to calculate predicted noise rise in a target cell and a neighbouring cell.

Preferably, the elements of the matrix are determined by means of a geometric or Monte Carlo method, a measurement campaign, or by logging data from actual traffic between base stations in a cell.

A method of controlling call admission in a communication system in accordance with the present invention will now be described with reference to the accompanying drawings in which:

Figure 1 is a block diagram exemplifying an example of a method according to the present invention, illustrating the geometrical significance of K; and,

Figure 2 shows a distribution of relative prediction error in the method of the present invention.

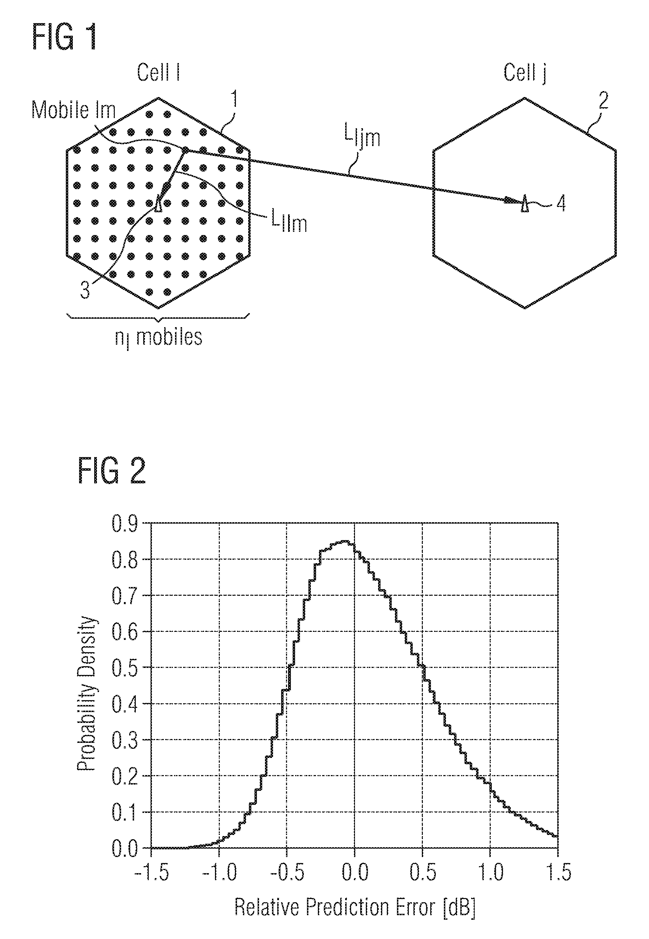

The example of Fig. 1 shows two adjacent cells 1, 2 with base stations 3, 4 respectively. From a particular mobile device $M_{lm}$ in a particular cell and influenced by another adjacent cell, there is a path gain to each base station 3, 4 i.e. $L_{ljm}$ and $L_{llm}$.

For the purpose of deriving a prediction of whether or not a particular mobile can be allowed to set up a call, let:

| | |
|---|---|
| $L$ | be the number of base stations in the deployment; |
| $R_j$ | be the total power received as interference plus noise in the $j$th base station; |
| $N_j$ | be the noise power received by the $j$th base station; |
| $n_l$ | be the number of mobiles affiliated to the $l$th base station; |
| $L_{jlm}$ | be the path gain between the $m$th mobile affiliated to the $l$th base station and the $j$th base station; |
| $\gamma$ | be the required Eb/No, i.e. the ratio of energy per bit to the spectral noise density; |
| $B_T$ | be the spread bandwidth; |

$B_{lm}$ be the bit rate for the mth mobile affiliated to the *l*th base station;

$F$ be the orthogonality factor for self interference. This is equal to zero if there is no self interference and unity if the self interference is equivalent to an independent user received at the same power;

$P_{lm}$ be the power transmitted by the mth mobile affiliated to the *l*th base station.

Then

$$R_j = \sum_{l=1}^{L} \sum_{m=1}^{n_l} P_{lm}.L_{jlm} + N_j \quad \dots\dots\dots\dots 1$$

i.e. the sum of power received from all mobiles and noise.

Now consider the operation of power control. Due to self orthogonality, the total interference and noise that the *m*th mobile affiliated to the *l*th base station must overcome is $R_l - P_{lm}.L_{llm}(1-F)$, i.e. the own signal of that mobile is subtracted from the total interference plus noise, modified by the orthogonality factor. Thus, the power that power control will set is given by

$$P_{lm} = \frac{\gamma.B_{lm}\left(R_l - P_{lm}.L_{llm}\left(1-F\right)\right)}{L_{llm}.B_T}$$

Now the second term in the numerator contains $P_{lm}$ so the expression is manipulated to obtain

$$P_{lm} = \frac{\gamma.B_{lm}}{L_{llm}.B_T\left(1 + \frac{\left(1-F\right)\gamma.B_{lm}}{B_T}\right)}.R_l$$

in terms of $P_{lm}$ alone Now substitute for $P_{lm}$ in equation 1 to obtain

$$R_j = \sum_{l=1}^{L} R_l.\frac{\gamma}{B_T} \sum_{m=1}^{n_l} \frac{B_{lm}}{1 + \frac{\left(1-F\right)\gamma.B_{lm}}{B_T}}.\frac{L_{ljm}}{L_{llm}} + N_j$$

Let

$$k_{jl} = \frac{\gamma}{B_T} \sum_{m=1}^{n_l} \frac{B_{lm}}{1 + \frac{\left(1-F\right)\gamma.B_{lm}}{B_T}}.\frac{L_{ljm}}{L_{llm}} \quad \dots\dots\dots\dots 2$$

where $k_{jl}$ is an element of K
Then in vector / matrix form

$$\mathbf{R = KR + N} \quad \dots\dots\dots\dots 3$$

which can readily be solved to obtain

$$R = (I - K)^{-1} N \quad \text{.............................................................................................................................} \quad 4$$

Thus, if all the details of all radio links are known it is possible to predict the noise rises exactly.

In general, $K$ is not known. However, the method of the present invention provides a useful approximation to $K$. Essentially the elements of $K$ can be viewed as cross-coupling coefficients between cells. This can be seen geometrically in Fig. 1.

If the distribution of mobiles over cell $l$ is completely uniform then an average $k_{jl}$ is represented as

$$k_{jl} = \frac{\gamma}{B_T} \sum_{m=1}^{n_l} \frac{B_{lm}}{1 + \dfrac{(1-F)\gamma . B_{lm}}{B_T}} \cdot \frac{1}{n_l} \sum_{m=1}^{n_l} \frac{L_{ljm}}{L_{llm}}$$

where the first term is related to the aggregate bit rate and the second term is an average geometric cross-coupling coefficient. Thus, the cross coupling is represented in terms of a limiting average as

$$\hat{k}_{jl} = d_l . Lt_{n_l \to \infty} \frac{1}{n_l} \sum_{m=1}^{n_l} \frac{L_{ljm}}{L_{llm}}$$

where the first term is an aggregate bit rate related 'density' and the second term is the average geometric cross-coupling coefficient. As $n_l$ tends to infinity with mobiles randomly deployed over the $l$th cell this becomes the average cross coupling, equivalent to integrating over the cell. This is denoted by $s_{jl}$. Thus,

$$\hat{k}_{jl} = d_l . s_{jl}$$

Thus, the elements $s_{jl}$ in the analytical model can be obtained by integration, either numerically or by a Monte-Carlo method. Alternatively, a propagation model can be used, which may be in conjunction with a limited automated measurement campaign.

Now if $D$ is the diagonal matrix with elements $d_l$, then

$$\hat{K} = SD$$

and so

$$R = SDR + N$$

where $S$ is a matrix of the average geometric cross coupling coefficients.
Unlike in equation 3, the unknown here is $D$, which can easily be solved for using

$$DR = S^{-1}(R\text{-}N)$$

$S$ and $S^{-1}$ can be pre-computed and stored as lookup tables for each base station with elements for its immediate neighbours. Thus, for every base station the $S$ matrix will be essentially the same, but will have differences according to the number of immediate neighbours (fewer for base stations at the edge of a deployment) and the varying geometries of cells. **D** is then obtained by dividing the elements of $\mathbf{S}^{-1}(\mathbf{R\text{-}N})$ by the elements of **R** and $\hat{\mathbf{K}}$ is then formed by multiplication of **D** by **S**.

Thus, a version of $\hat{\mathbf{K}}$ is obtained that is consistent with the observed noise rises to that point in time. The order of $\hat{\mathbf{K}}$ is only the target base station plus its immediate neighbours (typically a maximum of 7), whereas the order of **K** is the number of base stations in the entire deployment. Therefore, in computing **D** some artificial weighting will arise, making the effective load in the neighbouring cells appear higher than in reality in order to compensate for the absence of higher tier neighbours in the model.

Now consider a new mobile for which call admission is to be tested. This mobile scans pilots and obtain the $r$ strongest, noting the base station identity and strength for each one. Typically, this is a number not exceeding 3. The mobile reports the measurements to the base station for which the strongest pilot was seen. Essentially the ratios of the pilot levels give the $L_{ljm}/L_{llm}$ ratios, assuming that the pilots are all transmitted with the same power. These provide terms that are added to $\hat{\mathbf{K}}$ according to equation 2, adding the terms to $l$th column. Equation 4 is then resolved, but using the modified $\hat{\mathbf{K}}$. Then the new noise rise in the target cell and in the surrounding cells can be observed. If the *predicted* noise rise in the target cell and the surrounding cells is below the threshold then the call can proceed, otherwise not.

To summarise, average normalised cross coupling parameters are generated and stored for every base station. When a new call is to be set up, the mobile measures the pilot levels and codes and reports these to its target cell. A decision is made based on computations using these measurements plus the noise levels in the target cell and its immediately surrounding cells.

It is clearly of interest to have some idea of the prediction error. This has been modelled for a scenario of 19 omni-directional cells (arranged as one centre plus two concentric rings in a tessellating hexagon pattern), taking data only from the inner 7 cells. The cell radius was 1 km and the radio propagation model was COST 231 Hata, dense urban with base station and mobile station antenna heights of 15 and 1.5 metres respectively.

The prediction error for the noise rise in the wanted cell is defined in decibels as

$$10\log_{10}\left\{\frac{\hat{R}_j^{new} - R_j^{old}}{R_j^{new} - R_j^{old}}\right\}$$

Where

$j$     is the index of the affiliated base station

$R_j^{old}$     is the noise rise before the new mobile is added

$R_j^{new}$     is the noise rise after the new mobile is added

$\hat{R}_j^{new}$     is the predicted noise rise

The results can be seen in Fig. 2 which is a graph of probability density against relative prediction error in dB. The mean error in decibels was 0.12 dB and the standard deviation 0.5 dB. These low figures required representative values for the entries in S. The original analysis was performed without shadow fading and a simple integration was performed based on deploying the mobile at random over the reference cell. When shadow fading was present this approach gave poor results (mean error -0.6 dB and standard deviation 2.1 dB - these ignore some outliers in which the prediction was actually *below* the level without the mobile).

The reason for this is that the effect of shadow fading is to allow some mobiles located physically inside a particular cell not to select that cell as their preferred cell and for some mobiles located outside a particular cell, nevertheless to select it as their preferred cell. Thus, a more accurate Monte Carlo model was required, taking account of these effects.

**Claims**

**1.** A method of controlling call admission in a communication system, the method comprising predicting an estimated base station noise rise due to a new user wishing to join a cell of the system; determining availability of resources based on the predicted noise rise due to the new user; and allocating resources only if the predicted noise rise due to the new user does not cause a maximum total permitted noise rise level in the system to be exceeded; wherein a matrix of average geometric cross coupling coefficients between cells is predetermined and stored for each base station, with elements for the base station's immediate neighbours; and wherein the reported measurements of the mobile of the new user, together with the predetermined cross coupling coefficients from the matrix are used to determine whether to admit the new user.

2. A method according to claim 1, where the base station noise rise is predicted using current noise rises in base stations in other cells in the system and reported measurements from potential base stations.

3. A method according to claim 2, wherein the base stations in the other cells whose noise rises are used in predicting the base station noise rise in the cell which the new user wishes to make a call are restricted to cells that are neighbours of that cell

4. A method according to at least claim 2, wherein a mobile device of the new user determines strength of pilots received from potential base stations, determines the base station providing the strongest pilot and reports its measurements to that base station.

5. A method according to claim 3, wherein the reported measurements are used to calculate predicted noise rise in a target cell and a neighbouring cell.

6. A method according to any preceding claim, wherein the elements of the matrix are determined by means of a geometric or Monte Carlo method, a measurement campaign, or by logging data from actual traffic between base stations in a cell.

## FIG 1

Cell l

Mobile lm

1

Cell j

2

$L_{ljm}$

$L_{llm}$

3

4

$n_l$ mobiles

## FIG 2

**EP 1 931 166 A1**

**European Patent Office**

**EUROPEAN SEARCH REPORT**

Application Number

EP 07 12 1777

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/117533 A1 (CAVE CHRISTOPHER [CA]) 2 June 2005 (2005-06-02) * abstract * * paragraph [0006] * * paragraph [0015] - paragraph [0018] * * paragraph [0023] - paragraph [0028] * * paragraph [0050] - paragraph [0051] * * paragraph [0055] - paragraph [0074] * ----- | 1-6 | INV. H04Q7/38 |
| A | WO 99/45736 A (ERICSSON TELEFON AB L M [SE]) 10 September 1999 (1999-09-10) * abstract * * page 5, line 22 - page 6, line 23 * * page 15, line 11 - page 16, line 11 * ----- | 1-6 | |
| A | EP 1 326 465 A (MITSUBISHI ELECTRIC INF TECH [NL]) 9 July 2003 (2003-07-09) * abstract * * paragraph [0003] - paragraph [0009] * * paragraph [0015] - paragraph [0025] * * claim 1 * ----- | 1-6 | |
| | | | **TECHNICAL FIELDS SEARCHED (IPC)** H04L H04Q |

The present search report has been drawn up for all claims

| Place of search | Date of completion of the search | Examiner |
|---|---|---|
| Munich | 22 April 2008 | Lombardi, Giuseppe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

8

**ANNEX TO THE EUROPEAN SEARCH REPORT
ON EUROPEAN PATENT APPLICATION NO.**

EP 07 12 1777

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2008

| Patent document cited in search report | | Publication date | Patent family member(s) | | Publication date |
|---|---|---|---|---|---|
| US 2005117533 | A1 | 02-06-2005 | NONE | | |
| WO 9945736 | A | 10-09-1999 | AU | 765049 B2 | 04-09-2003 |
| | | | AU | 2756499 A | 20-09-1999 |
| | | | BR | 9908577 A | 21-11-2000 |
| | | | CA | 2322296 A1 | 10-09-1999 |
| | | | CN | 1292981 A | 25-04-2001 |
| | | | EP | 1060631 A1 | 20-12-2000 |
| | | | JP | 2002506334 T | 26-02-2002 |
| | | | US | 2001053695 A1 | 20-12-2001 |
| EP 1326465 | A | 09-07-2003 | JP | 2004040756 A | 05-02-2004 |

EPO FORM P0459